**Europäisches Patentamt**

**European Patent Office**

**Office européen des brevets**

(19)

(11) Publication number: **0 133 775**
**A2**

(12) # EUROPEAN PATENT APPLICATION

(21) Application number: **84305084.0**

(22) Date of filing: **26.07.84**

(51) Int. Cl.⁴: **C 03 B 7/20**

(30) Priority: **13.08.83 GB 8321859**

(43) Date of publication of application:
**06.03.85 Bulletin 85/10**

(84) Designated Contracting States:
**DE FR IT**

(71) Applicant: **EMHART INDUSTRIES, INC.**
**426 Colt Highway**
**Farmington Connecticut 06032(US)**

(72) Inventor: **Fenton, Frank Alan**
**72 Sandall Park Drive**
**Wheatley Doncaster South Yorkshire(GB)**

(74) Representative: **Drury, Peter Lawrence et al,**
**P.O. Box 88 Ross Walk Belgrave Road**
**Leicester LE4 5BX(GB)**

(54) **A gob distributor for a glassware manufacturing machine.**

(57) The distributor comprises a scoop (14; 114) which can be aligned in turn with the sections of the machine to deliver a gob to each section in turn. Positioning means (20, 22; 120, 122) is operable to turn the scoop to align it and comprises an externally-toothed ring-shaped gear (20; 120) on which the scoop is mounted, an internally-toothed ring shaped gear (22; 122) which surround and drives the externally-toothed gear, and a servo-motor (26; 126) which drives the internally-toothed gear through selected angles to align the scoop. Further scoops (16; 115, 116) may also be driven by the same internally-toothed gear and servo-motor.

Fig. 1

EP 0 133 775 A2

1.

A gob distributor for a glassware
manufacturing machine

     This invention is concerned with a gob distributor for a glassware manufacturing machine of the individual section type operable to deliver a required number of gobs of molten glass to each section of the machine in a selected sequence.

     A glassware manufacturing machine of the individual section type comprises a plurality of individual glass moulding units called "sections". The sections are mounted on a common frame to be fed with glass from a common feeder and to feed their output to a common conveyor. Each section can be arranged to operate in either a single gob mode, in which it receives one gob of molten glass at a time, moulds it into a parison in a parison mould thereof, transfers the parison to a blow mould, blows the parison into an article in the blow mould, and transfers the article to the conveyor, or in a double gob mode in which two gobs received simultaneously are moulded in two parison moulds and subsequently in two blow moulds. It is also possible for the sections to work in triple or even quadruple gob modes, although which modes are possible depends on the size of the articles being manufactured. Between the feeder and the sections is the gob distributor of the machine which receives successive gobs from the feeder and distributes them to the sections in a selected sequence, the distributor receiving and delivering simultaneously the required number of gobs for the mode in which the sections are working. The sections then operate on the gobs in timed relationship to one another starting in the order in which they receive gobs.

     A conventional gob distributor comprises one or more gob-directing scoops (one for each gob to be delivered simultaneously). Each scoop is in the form of a trough which is curved in a vertical plane and has an upper end which is arranged to receive gobs falling from an orifice of a forehearth feeder and a lower end arranged to be aligned with a gob guide of any of the sections so that the scoop delivers a gob to the gob guide. Each section has one gob guide for each gob that it receives simultaneously which is arranged to guide a gob delivered thereto to a parison mould of the section. The lower end of each scoop is aligned with the guides by turning the scoop about a vertical axis passing through its upper end by operating turning means of the distributor in timed relationship with the fall of gobs from the orifice.

The turning means of a conventional gob distributor comprises an externally-toothed ring-shaped gear associated with each scoop, the scoop being mounted on the gear and passing therethrough and the gear being arranged to turn about the vertical axis of the scoop. The turning means also comprises a rack having teeth meshed with teeth of each of the gears, a cam roll secured to the rack, a plate cam on the edge of which the cam roll runs and whose shape determines the selected sequence of the sections, drive means which constantly rotates the cam, and spring means which urges the rack against the cam.

The turning means of a conventional gob distributor is very bulky and therefore is difficult to position in an operative position in which the upper end of each scoop is vertically below a feeder orifice. Indeed, it has sometimes been necessary to reposition the entire machine to enable a satisfactory operating position to be achieved.

It is an object of the present invention to provide a less bulky gob distributor than the conventional gob distributor described above.

The invention provides a gob distributor for a glassware manufacturing machine of the individual section type operable to deliver at least one gob of molten glass to each section of the machine in turn in a selected sequence, each section having a gob guide for each gob delivered thereto in the sequence arranged to guide a gob delivered thereto to a mould of the section, the distributor comprising at least one gob-delivering scoop having an upper end arranged to receive a gob and a lower end arranged to be aligned with a gob guide of any of the sections so that the scoop delivers a gob received thereby to the gob guide, and positioning means operable to turn the scoop about a vertical axis passing through the upper end thereof thereby aligning the lower end of the scoop with the gob guides, characterised in that the positioning means comprises an externally-toothed ring-shaped gear on which the scoop is mounted, the scoop passing through the gear and the gear being arranged to turn about the vertical axis of the scoop to align the lower end of the scoop with the gob guides, an internally-toothed ring-shaped gear through which the scoop passes and which is arranged to turn about a vertical axis to drive the externally-toothed gear about its vertical axis, and a servo-motor arranged to turn the internally-toothed gear about its vertical axis through selected angles so that the lower end of the scoop is aligned with a gob guide of each section in turn in the selected sequence.

A compact construction is achieved in a gob distributor according to the last preceding paragraph so that the distributor can be readily positioned. Where two gobs are to be delivered simultaneously to a section, an advantageous compact construction is achieved if the distributor comprises a further gob-directing scoop mounted on an externally-toothed gear which is meshed with the internally-toothed gear to be driven thereby to deliver a further gob to each section in the selected sequence. Where three gobs are to be delivered simultaneously, an advantageous compact construction is also achieved if the distributor comprises a third gob-directing scoop, the third scoop being between the other two scoops and being mounted on an externally-toothed ring-shaped gear, and the externally-toothed gear on which the third scoop is mounted is driven by an idler gear which is driven by a drive gear of the internally-toothed gear.

The lack of bulk of a gob distributor according to the last preceding paragraph but one makes it practical to provide moving means operable in the operation of the machine to move the or each scoop, the gears and the servo-motor between a first position thereof in which the upper end of the or each scoop is vertically below a gob-releasing orifice of a feeder forehearth and a second position thereof in which the upper end of the or each scoop is not vertically below such an orifice. In this case, it is advantageous if the distributor also comprises an interceptor blade associated with the or each scoop and movable with the scoop by the operation of the moving means, the interceptor blade being effective in the second position to intercept a gob falling from the orifice and direct it into a cullet chute. This arrangement is inherently more safe than in the conventional distributor described above, since, in the event of a section breaking down, the distributor can be moved out-of-the-way when a gob would otherwise be delivered to that section. In the conventional distributor, the scoop aligns with the broken down section but an interceptor prevents a gob from entering the scoop. Even though the interceptor is intended to be fail safe, there is a remote possibility of a gob being delivered to a broken down section which would endanger anyone repairing that section. An interceptor may be utilised in conjunction with moving the distributor for even greater safety.

The invention also provides a method of distributing gobs to the sections of a glassware manufacturing machine of the individual section type, characterised in that the method comprises positioning a gob distributor according to the last preceding paragraph but two in an operative position such that the upper end of each scoop of the distributor is vertically below an associated feeder forehearth orifice, operating the positioning means of the distributor to align the lower end of each scoop with a gob guide of each section in a selected sequence so that each scoop directs successive gobs falling from its associated orifice to the sections in turn, and, when one of the sections is inoperative, moving the distributor from its operative position, after each scoop has delivered a gob to the section immediately preceding the inoperative section in the sequence, to a position in which the upper end of each scoop is not vertically below its associated orifice so that the next gob is not delivered to the inoperative section, and returning the distributor to its operative position after a gob has fallen from the orifice, so that the next gob is delivered to the section immediately following the inoperative section in the sequence.

With the conventional gob distributor described above as re-programming involves changing the cam, it is not possible to re-programme the distributor to operate with one less section should one section suffer a prolonged breakdown. A gob distributor in which this is possible is described in U.S. Patent Specification No. 4357157 which describes a distributor with two scoops each of which is mounted on a vertically-extending shaft. Each shaft is turned by an individual servo-motor so that re-programming is possible by changing the control signals to the servomotors. Re-programming is possible with a distributor as described in the last preceding paragraph but three and that distributor has only one servo-motor instead of one per scoop.

Although U.S. Specification 4357157 suggests that one servo-motor can be used to turn two scoops, it does not indicate how this can be achieved nor is it clear whether the arrangement described can be used with three scoops.

A gob-distributor according to the last preceding paragraph but four has the further advantages that the externally and internally toothed gears can be contained in an oil bath reducing maintenance requirements and that, in the event of an emergency shut-down of the machine, the distributor can be rapidly moved to an out-of-the-way position.

There now follows a detailed description, to be read with reference to the accompanying drawings, of two gob distributors and a method of distributing gobs which are illustrative of the invention. It is to be understood that the illustrative distributors and method have been selected for description by way of example and not of limitation of the invention.

In the drawings:

Figure 1 is a plan view of the first illustrative gob distributor;

Figure 2 is a side elevational view, with parts broken away to show the construction, of the first illustrative gob distributor;

Figure 3 is a diagrammatic view of the gears of the first illustrative gob distributor;

Figure 4 is a front elevational view of the first illustrative gob distributor on a smaller scale than Figures 1 and 2;

Figure 5 is a plan view of the second illustrative gob distributor;

Figure 6 is a side elevational view, on a larger scale than Figure 5, of the second illustrative gob distributor; and

7.

Figure 7 is a diagrammatic view of the gears of the second illustrative gob distributor.

The first illustrative gob distributor is for a glassware manufacturing machine of the individual section type and is operable to deliver two gobs of molten glass to each section in turn in a selected sequence. Each of the sections is of conventional construction and has two gob guides, one for each gob, each arranged to guide a gob delivered thereto to one of two parison moulds of the section.

The first illustrative gob distributor comprises a casing 10 which is mounted on two parallel guide rods 12, one above the other, of the machine. The guide rods 12 extend transversely of the sections of the machine and the casing 10 is movable along the guide rods 12 by the operation of moving means to be described.

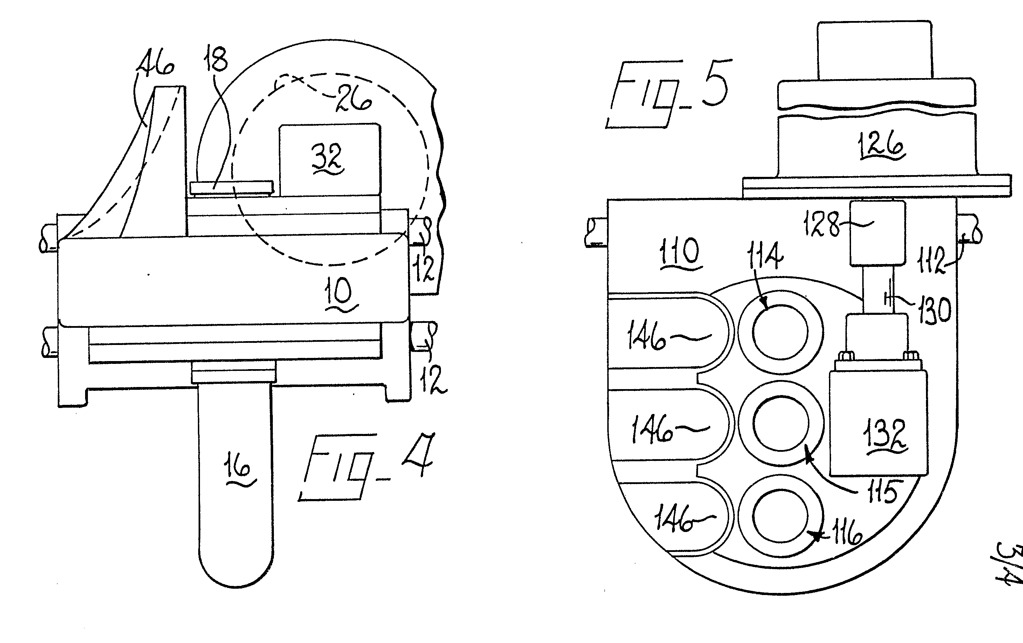

The first illustrative gob distributor also comprises two gob-directing scoops 14 and 16, one for each gob. Each scoop 14 and 16 has a tubular upper end 18 which extends vertically through the casing 10 and a trough-like lower end (one visible in Figure 4) below the casing 10 which is arranged to be aligned with a gob guide of any of the sections. The arrangement is such that a gob entering the upper end 18 of a scoop 14 or 16 from above the casing 10 passes into the lower end of the scoop which is curved in a vertical plane. The gob follows the curve of the scoop and is delivered to the gob guide with which the scoop is aligned.

The first illustrative gob distributor also comprises positioning means operable to turn each scoop 14 and 16 about a respective vertical axis passing centrally through the upper end 18 thereof to thereby align the lower end of the scoop 14 or 16 with the gob guides. The positioning means comprises an externally-toothed ring-shaped gear 20 associated with each scoop 14 or 16, the scoop 14 or 16 being mounted on the gear 20 with the upper end 18 of the scoop passing centrally through the gear 20. The gears 20 are within the casing 10 and each is arranged to turn about the vertical axis of the scoop 14 or 16 to align the lower end of the scoop with the gob guides.

The positioning means of the first illustrative gob distributor also comprises an internally-toothed ring-shaped gear 22 which is mounted within the casing 10 on a circular bearing 24 for turning about a vertical axis midway between the vertical axes of the scoops 14 and 16. The gear 22 surrounds the gears 20 and meshes with both of them, the scoops 14 and 16 passing through the gear 22. The gear 22 is arranged to drive each gear 20 about its respective vertical axis.

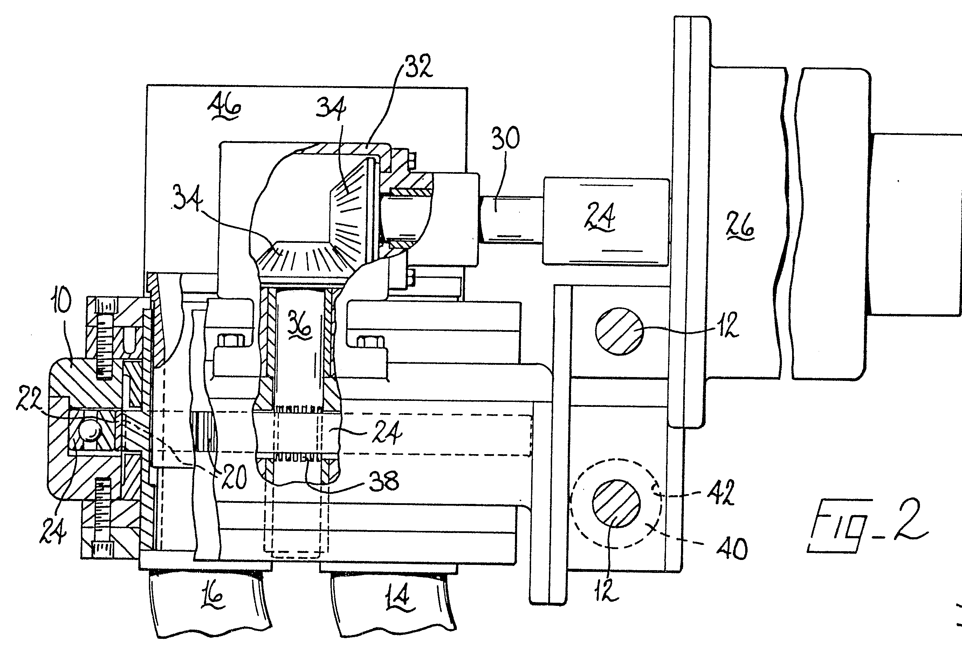

The positioning means of the first illustrative gob distributor also comprises a D.C. servo-motor 26 which is mounted on the casing 10 on the opposite side of the guide rods 12 to the gears 20 and 22. The servo-motor 26 is arranged to turn the gear 22 about its vertical axis through selected angles in response to control signals from control means thereof (not shown) so that the lower end of each scoop 14 and 16 is aligned with a gob guide of each section in turn in a selected sequence. An output shaft of the servo-motor 26 is coupled by a coupling 28 to an input shaft 30 of a gear box 32 which contains two bevel gears 34 (see Figure 2) which turn the drive through $90^{\circ}$ and has an output shaft 36 on which a gear 38 is mounted which is meshed with the gear 22 so that operation of the motor 26 turns the gear 22 and therefore the scoops 14 and 16.

The scoop 14 is closer to the guide rods 12 than is the scoop 16 and is nearer to the sections of the machine.

The scoop 16 is therefore made longer than the scoop 14 in order to reach the gob guides. For this reason, the scoop 16 requires to be turned through smaller angles than does the scoop 14. To enable this to occur, the gear 20 on which the scoop 16 is mounted is larger and has more teeth than the gear 20 on which the scoop 14 is mounted so that, for a given movement of the gear 22, the scoop 16 turns through a smaller angle than the scoop 14. Figure 3 shows the gears 20, 22 and 38 diagrammatically with the size difference between the two gears 20 exaggerated and arrows showing the direction of turning of the gears for one movement of the scoops 14 and 16.

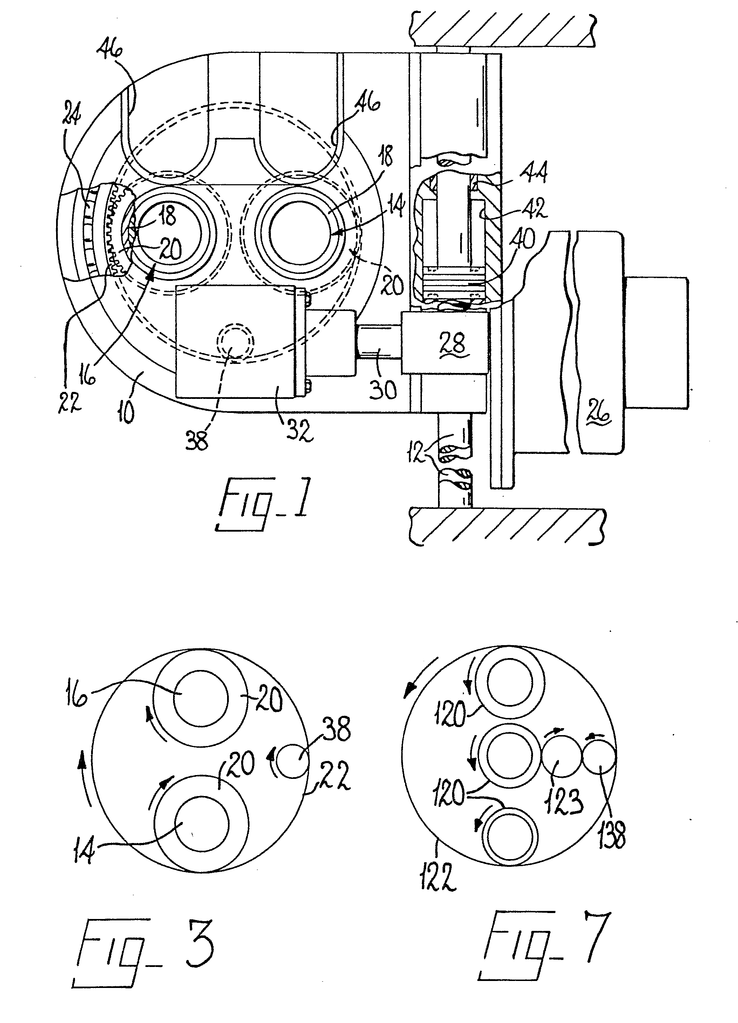

The first illustrative gob distributor also comprises moving means operable in the operation of the machine to move the casing 10 and therefore the scoops 14 and 16, the gears 20, 22 and 38 and the servo-motor 26 between a first position thereof in which the upper end 18 of each scoop 14 and 16 is vertically below a gob-releasing orifice (not shown) of a feeder forehearth and a second position thereof in which the upper end of each scoop is not vertically below such an orifice. Figure 1 shows the distributor in the first position thereof in which gobs falling from the orifices fall into the scoops 14 and 16 and are distributed to the sections. The second position is reached by a movement of the distributor along the guide rods 12 (downwards viewing Figure 1). The moving means comprises a piston 40 formed on the lower guide rod 12 within the casing 10. The casing 10 forms a cylinder 42 which can slide past the piston 40, the arrangement being such that, when fluid under pressure is introduced into the cylinder 42, the whole casing 10 slides along guide rods 10 on bearings 44. When the distributor is in its second position, the scoops 14 and 16 do not receive gobs from the orifices but instead each gob is intercepted

10.

by an interceptor blade 46 of the distributor associated with each scoop 14 and 16.   The interceptor blades 46 (See Figure 4) are curved in a vertical plane and are mounted on top of the casing  10 so that they are movable with the scoops 14 and  16 by the operation of the moving means.  The interceptor blades 46 are arranged beside the scoops 14 and 16 so that, when the distributor is in its second position, they intercept gobs falling from the orifices and direct them into a cullet chute (not shown) to the side of the distributor.

The casing 10 forms an oil bath within the gear 22 so that the gears 20, 22 and 38 run in the oil bath. This arrangement minimises maintenance of the distributor.

The first illustrative gob distributor is used in the aforementioned illustrative method of distributing gobs.   This method comprises positioning the first illustrative gob distributor in its first position which is an operative position such that the upper end 18 of each scoop 14 and 16 is vertically below an associated feeder forehearth orifice so that gobs falling from the orifices enter the scoops 14  and 16.   The method also comprises operating the positioning means of the distributor to align the lower end of each scoop 14 and  16 with a gob guide of each section in a selected sequence so that each scoop 14 and 16 directs successive gobs falling from its associated orifice to the sections in turn.   The scoops 14 and 16 are turned by operating  the servo-motor and the sequence of sections is selected by the control signals to the servo motor.

For example, if the  illustrative method is utilised to distribute gobs to the sections of a six section machine, the first pair of gobs falling from the orifices are delivered to one  of the  sections (e.g. number 1 numbering along the machine frame from one end), the servo-motor 26 is then operated to align the scoops 14 and 16 with another section (e.g. number 4), the second pair of gobs are delivered to that section and so on until each section has received a pair of gobs when the delivery is again to the first section. The order could, for example, be 1, 4, 3, 6, 5, 2 and back to 1.

In the illustrative method, when one of the sections is inoperative (e.g. because of a break-down thereof), the moving means of the distributor is used moving the distributor from its operative position, after each scoop 14, 16 has delivered a gob to the section immediately preceding the inoperative section in the sequence, to the second position thereof in which the upper end 18 of each scoop 14 and 16 is not vertically below its associated orifice so that the next gob is not delivered to the inoperative section. Thus, in the example given above, if section number 3 is inoperative, after gobs have been delivered to section 4, fluid under pressure is introduced into the cylinder 42 so that the distributor moves to its second position. Then, although the servo-motor 26 turns the scoops 14 and 16 to the orientation which would deliver gobs to section number 3, the gobs are intercepted by the interceptor blades and go to the cullet chute instead of section number 3. After a gob has fallen from each orifice, the distributor is returned to its operative position by introducing fluid under pressure into the cylinder 42 on the opposite side of the piston 40. The next gobs are then delivered to the section immediately following the inoperative section in the sequence (number 6 in the example). The possibility of moving the distributor in this way is dependent on the distributor being sufficiently low in bulk as is achieved by the compact structure of the first illustrative gob distributor. If a section of the machine is inoperative for a prolonged period, the control signals to the servo-motor 26 can be re-programmed so that that section is omitted from the sequence; this prevents wastage of gobs.

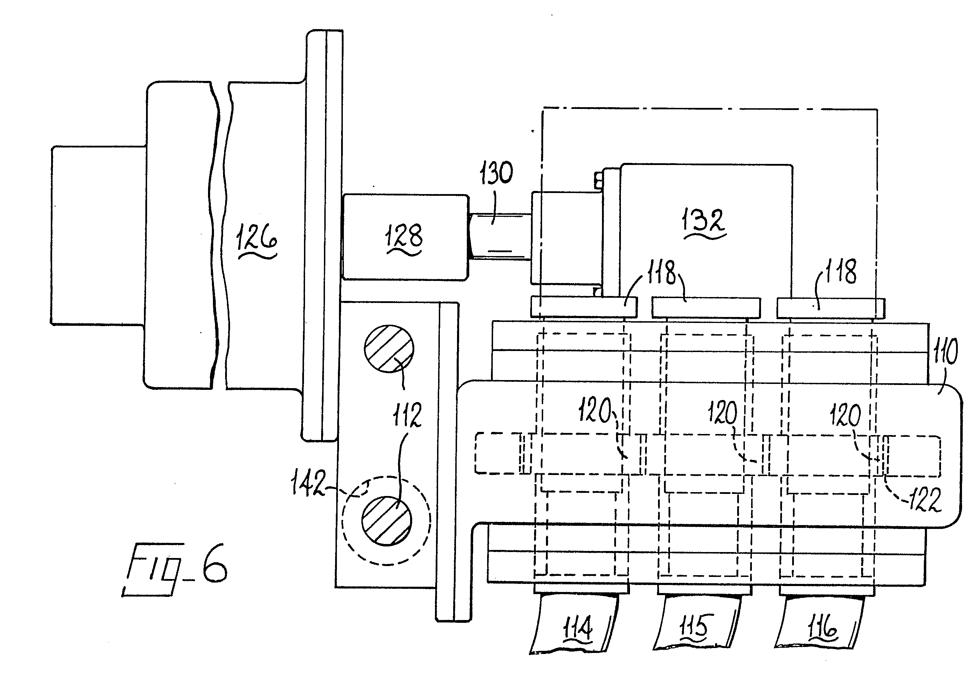

The second illustrative gob distributor shown in Figure 5 and 6 is generally similar in construction and function to the first illustrative gob distributor except that it has three scoops and is operable to deliver three gobs of molten glass to each section of a glassware manufacturing machine of the individual section type. The distributor comprises a casing 110 which is mounted on two parallel guide rods 112, and three gob-directing scoops 114, 115 and 116, one for each gob. Each scoop 114, 115 and 116 has a tubular upper end 118 which extends through the casing 110 and a trough-like lower end below the casing 110 (see Figure 6), the scoops 114, 115 and 116 being curved in a vertical plane.

The second illustrative gob distributor also comprises positioning means operable to turn the scoops 114, 115 and 116 about respective vertical axes to align the lower end of the scoops with gob guides. The positioning means comprises three externally-toothed ring-shaped gears 120, one associated with each scoop and on which the scoop is mounted. The scoops pass through the gears 120 and each gear 120 is within the casing 110 and arranged to turn about the vertical axis of its scoop. The positioning means also comprises an internally-toothed ring-shaped gear 122 which is mounted within the casing 110 on a circular bearing for turning about a vertical axis mid-way between the vertical axes of the scoops 114 and 116, which axis coincides with the vertical axis of the scoop 115. The gear 122 surrounds the gears 120 and meshes with two of them (those associated with the scoops 114 and 116). The positioning means also comprises an idler gear 123 which meshes with the gear 120 associated with the scoop 115 and with a drive gear 138 of the gear 122. For reasons explained in relation to the first gob distributor, the gear 120 associated with the scoop 116 has a larger diameter and more teeth than the gear 120 associated with the scoop 115 which has a larger diameter and more teeth than the gear 120 associated with the scoop 114. The gear 122 is arranged to drive two of the gears 120 about their respective vertical axes while the drive gear 138 drives the third gear 120 about its vertical axis through the idler gear 123.

The positioning means of the second illustrative gob distributor also comprises a D.C. servo-motor 126 arranged to turn the gear 138 and therefore the gear 122. An output shaft of the motor 126 is coupled by a coupling 128 to an input shaft 130 of a gear box 132 which turns the drive through $90^{\circ}$ and has an output shaft on which the gear 138 is mounted.

The second illustrative gob distributor has moving means identical to that of the first illustrative gob distributor for moving the distributor along the guide rods 112. The moving means comprises a cylinder 142 indicated in Figure 6. Three interceptor blades 146 are mounted on the casing 110 and act in identical manner to the interceptor blades 46 of the first illustrative gob distributor.

The second illustrative gob distributor can be used in the illustrative method of gob distributing when three gobs are to be delivered to each section.

Claims:

1. A gob distributor for a glassware manufacturing machine of the individual section type operable
to deliver at least one gob of molten glass to each
section of the machine in turn in a selected sequence,
each section having a gob guide for each gob delivered
thereto in the sequence arranged to guide a gob delivered
thereto to a mould of the section, the distributor
comprising at least one gob-delivering scoop (14; 114)
having an upper end (18; 118) arranged to receive a gob
and a lower end arranged to be aligned with a gob guide
of any of the sections so that the scoop delivers a gob
received thereby to the gob guide, and positioning means
operable to turn the scoop about a vertical axis passing
through the upper end thereof thereby aligning the lower
end of the scoop with the gob guides, characterised in
that the positioning means (20, 22; 120, 122, 123)
comprises an externally-toothed ring-shaped gear (20; 120)
on which the scoop (14; 114) is mounted, the scoop
passing through the gear and the gear being arranged to
turn about the vertical axis of the scoop to align the
lower end of the scoop with the gob guides, an internally-
toothed ring-shaped gear (22; 122) through which the scoop
passes and which is arranged to turn about a vertical axis
to drive the externally-toothed gear (20; 120) about its
vertical axis, and a servo-motor (26; 126) arranged to
turn the internally-toothed gear about its vertical axis
through selected angles so that the lower end of the
scoop is aligned with a gob guide of each section in turn
in the selected sequence.

2. A gob distributor according to claim 1,
characterised in that the distributor comprises a further
gob-directing scoop (16; 116) mounted on an externally-toothed gear (20; 120) which is meshed with the internally-toothed gear (22; 122) to be driven thereby to deliver a further gob to each section in the selected sequence.

3. A gob distributor according to claim 2, characterised in that the externally-toothed gear (20; 120) on which one of the scoops (16; 116) is mounted is larger and has more teeth than the gear on which the other scoop (14; 114) is mounted so that, for a given movement of the internally-toothed gear (22; 122), the first-mentioned scoop turns through a smaller angle than the other scoop.

4. A gob distributor according to either one of claims 2 and 3, characterised in that the distributor comprises a third gob-directing scoop (115), the third scoop being between the other two scoops (114, 116) and being mounted on an externally-toothed ring-shaped gear (120), and the externally-toothed gear (120) on which the third scoop is mounted is driven by an idler gear (123) which is driven by a drive gear (138) of the internally-toothed gear (122).

5. A gob distributor according to claim 4, characterised in that the three externally-toothed gears (120) are of different sizes and have different numbers of teeth so that, for a given movement of the internally-toothed gear (122), the scoops (114, 115, 116) turn through different angles.

6. A gob distributor according to any one of claims 1 to 5, characterised in that the distributor comprises moving means (40, 42; 142) operable in the operation of the machine to move the or each scoop (14, 16; 114, 115, 116) the gears (20, 22; 120, 122, 123) and the servo-motor (26; 126) between a first position thereof in which the upper end of the or each scoop is vertically below a gob-releasing orifice of a feeder forehearth and a second position thereof in which the upper end of the or each scoop is not vertically below such an orifice.

7. A gob distributor according to claim 6, characterised in that the distributor also comprises an interceptor blade (46; 146) associated with the or each scoop (14, 16; 114, 115, 116) and movable with the scoop of the moving means (40, 42; 142), the interceptor blade being effective in the second position to intercept a gob falling from the orifice and direct it into a cullet chute.

8. A gob distributor according to any one of claims 1 to 7, characterised in that the externally and internally-toothed gears (20, 22; 120, 122) are contained in an oil bath of the distributor.

9. A method of distributing gobs to the sections of a glassware manufacturing machine of the individual section type, characterised in that the method comprises positioning a gob distributor in an operative position such that the upper end of each scoop of the distributor is vertically below an associated feeder forehearth orifice, the gob distributor comprising at least one gob-delivering scoop (14; 114) having an upper end (18; 118) arranged to receive a gob and a lower end arranged to be aligned with a gob guide of any of the sections so that the scoop delivers a gob received thereby to the gob guide, and positioning means operable to turn the scoop about a vertical axis passing through the upper end thereof thereby aligning the lower end of the scoop with the gob guides, characterised in that the positioning means (20, 22; 120, 122, 123) comprises an externally-toothed ring-shaped gear (20; 120) on which the scoop (14; 114) is mounted, the scoop passing through the gear and the gear being arranged to turn about the vertical axis of the scoop to align the lower end of the scoop with the gob guides, an internally-toothed ring-shaped gear (22; 122) through which the scoop passes and which is arranged to turn about a vertical axis to drive the externally-toothed gear (20; 120) about its vertical axis, and a servo-motor (26; 126) arranged to turn the internally-toothed gear about its vertical axis through selected angles so that the lower end of the scoop is aligned with a gob guide of each section in turn in the selected sequence, operating the positioning means of the distributor to align the lower end of each scoop with a gob guide of each section in a selected sequence so that each scoop directs successive gobs falling from its associated orifice to the sections in turn, and, when one of the sections is inoperative, moving the distributor from its operative position, after each scoop has delivered a gob to the section immediately preceding the inoperative section in the sequence, to a position in which the upper end of each scoop is not vertically below its associated orifice so that the next gob is not delivered to the inoperative section, and returning the distributor to its operative position, after a gob has fallen from the orifice, so that the next gob is delivered to the section immediately following the inoperative section in the sequence.

Fig_1

Fig_3

Fig_7

FIG-2

Fig-5

Fig-4

FIG-6